# EUROPÄISCHE PATENTANMELDUNG

(11) **EP 1 724 866 A1**
(43) Veröffentlichungstag der Anmeldung: **22.11.2006**
(21) Anmeldenummer: 05010791.1
(22) Anmeldetag: 18.05.2005
(51) Int. Cl.: H01M 8/04

(54) **Verfahren zur Befeuchtung eines Gases sowie Gasbefeuchtungseinrichtung**

(71) Anmelder: SIEMENS AKTIENGESELLSCHAFT, 80333 München (DE)
(72) Erfinder: Coerlin, Detlev, 91056 Erlangen (DE); Stühler, Walter, 96114 Hirschaid (DE); Voitlein, Ottmar, 91475 Lonnerstadt (DE)

(57) **Zusammenfassung**

Bei einem Verfahren zur Befeuchtung eines Gases (O₂), wobei das Gas (O₂) durch einen Flüssigkeitsringverdichter (2) verdichtet und befeuchtet und anschließend durch einen Flüssigkeitsabscheider (3) geführt wird, wird erfindungsgemäß der Flüssigkeitsringverdichter (2) mit Flüssigkeit (4) aus dem Flüssigkeitsabscheider (3) betrieben. Bei einem Stillstand des Flüssigkeitsringverdichters (2) wird somit dem Flüssigkeitsabscheider (3) keine Flüssigkeit mehr zugeführt, so dass ein Überfluten des Flüssigkeitsringverdichters (2) mit Betriebsflüssigkeit bis hin zu einem Austreten von Betriebsflüssigkeit aus einer Ansaugöffnung des Flüssigkeitsringverdichters (2) vermieden werden kann.

## Beschreibung

Die Erfindung betrifft ein Verfahren zur Befeuchtung eines Gases gemäß Oberbegriff des Patentanspruchs 1 sowie eine Gasbefeuchtungseinrichtung gemäß Oberbegriff des Patentanspruchs 3. Ein derartiges Verfahren und eine derartige Vorrichtung sind z.B. aus der EP 0850 494 B1 bekannt.

Prozessgase müssen häufig für ihre Verwendung in einem technischen Prozess befeuchtet und verdichtet werden. Dies ist beispielsweise der Fall bei Prozessgasen in Brennstoffzellenanlagen. Beim Betrieb einer Brennstoffzellenanlage wird üblicherweise einem Brennstoffzellenstapel (in der Fachliteratur auch als "Stack" bezeichnet) zur Erzeugung elektrischen Stroms anodenseitig ein Brenngas, beispielsweise Wasserstoff, und kathodenseitig Luft oder Sauerstoff als weiteres Reaktionsgas zugeführt. Es gibt mittlerweile eine Vielzahl von unterschiedlichen Arten von Brennstoffzellenanlagen, die sich im Hinblick auf ihren Aufbau und insbesondere im Hinblick auf die verwendeten Elektrolyte sowie im Hinblick auf die notwendige Betriebstemperatur unterscheiden. Bei einer so genannten PEM-Brennstoffzelle ist zwischen einer gasdurchlässigen Anode und einer gasdurchlässigen Kathode eine Polymermembran angeordnet, die für Wasserstoffprotonen durchlässig ist. Da eine einzige Brennstoffzelle eine Spannung von lediglich etwa 0,7 bis 0,9 Volt liefert, sind mehrere Brennstoffzellen elektrisch in Serie zu einem Stapel miteinander verbunden.

Aus der EP 0850 494 B1 ist es bekannt, ein Prozessgas für einen Brennstoffzellenblock mit Hilfe eines Flüssigkeitsringverdichters gleichzeitig zu befeuchten und zu verdichten. Das befeuchtete und verdichtete Prozessgas wird hierbei vor der Zufuhr zu dem Brennstoffzellenblock über einen Flüssigkeitsabscheider geführt, um in dem Prozessgas enthaltene flüssigen Wasserbestandteile aus dem Prozessgas abzuscheiden.

Der Flüssigkeitsringverdichter wird hierbei mit Kühlwasser aus dem Brennstoffzellenblock betrieben. Der Befeuchtungsgrad des Prozessgases wird über die Temperatur und den Durchsatz des dem Flüssigkeitsringverdichter zugeführten Kühlwassers eingestellt.

Als problematisch erweist sich hierbei, dass dem Flüssigkeitsringverdichter auch bei einem Stillstand weiter Betriebsflüssigkeit in Form von Kühlwasser aus dem Brennstoffzellenblock zugeführt wird. Dies kann zu einem Überfluten des Flüssigkeitsringverdichters bis hin zu einem Austreten von Kühlwasser aus dessen Prozessgasansaugöffnung bzw. einem Eindringen von Kühlwasser in die Prozessgaszuführung führen.

Es ist deshalb Aufgabe vorliegender Erfindung, ein Verfahren zur Gasbefeuchtung und eine Gasbefeuchtungseinrichtung anzugeben, die es erlauben diese Probleme zu vermeiden.

Die Lösung der auf das Verfahren gerichteten Aufgabe gelingt durch ein Verfahren gemäß Patentanspruch 1. Die Lösung der auf die Gasbefeuchtungseinrichtung gerichteten Aufgabe gelingt durch eine Gasbefeuchtungseinrichtung gemäß Patentanspruch 3.

Ein Verfahren zum Betreiben einer Brennstoffzellenanlage mit einer derartigen Gasbefeuchtung sowie eine Brennstoffzellenanlage mit einer derartigen Gasbefeuchtungseinrichtung sind Gegenstand der Patenansprüche 5 bzw. 9.

Weitere vorteilhafte Ausgestaltungen der Erfindung sind jeweils Gegenstand der Unteransprüche.

Erfindungsgemäß fungiert der dem Flüssigkeitsringverdichter nachgeschaltete Flüssigkeitsabscheider gleichzeitig auch als Flüssigkeitsvorlage für den Flüssigkeitsringverdichter. Aufgrund des Betriebs des Flüssigkeitsringverdichters mit Flüssigkeit aus dem Flüssigkeitsabscheider führt ein Stillstand des Flüssigkeitsringverdichters auch zu einem Stillstand der Zufuhr von Flüssigkeit zu dem Flüssigkeitsabscheider und somit auch zu einem Stillstand der Zufuhr von Betriebsflüssigkeit zu dem Flüssigkeitsringverdichter. Hierdurch kann ein Überfluten des Flüssigkeitsringverdichters mit der Folge eines Flüssigkeitsaustritts auf der Gasansaugseite verhindert werden.

Für die Nachspeisung der bei der Gasbefeuchtung verbrauchten Flüssigkeit kann dem Flüssigkeitsabscheider noch zusätzliche Flüssigkeit zugeführt werden.

Das erfindungsgemäße Verfahren zur Befeuchtung eines Gases bzw. die erfindungsgemäße Gasbefeuchtungseinrichtung können besonders vorteilhaft für die Befeuchtung eines Prozessgases eines Brennstoffzellenstapels einer Brennstoffzellenanlage verwendet werden.

Zum Vorbefeuchten und Erwärmen des Prozessgases vor dessen Zuführung zum Brennstoffzellenstapel und zur Verringerung des Volumens an benötigtem Prozessgas kann dem Prozessgas vor dem Befeuchten durch den Flüssigkeitsringverdichter ein Prozessabgas zugeführt werden. Unter einem Prozessabgas wird hierbei ein Prozessgas verstanden, das eine oder mehrere Brennstoffzellen der Brennstoffzellenanlage durchströmt hat.

Die Erfindung sowie weitere vorteilhafte Ausgestaltungen der Erfindung gemäß Merkmalen der Unteransprüche werden im Folgenden anhand von Ausführungsbeispielen in den Zeichnungen näher erläutert. Es zeigen:
- FIG 1: eine erfindungsgemäße Gasbefeuchtungseinrichtung und
- FIG 2: eine erfindungsgemäße Brennstoffzellenanlage.

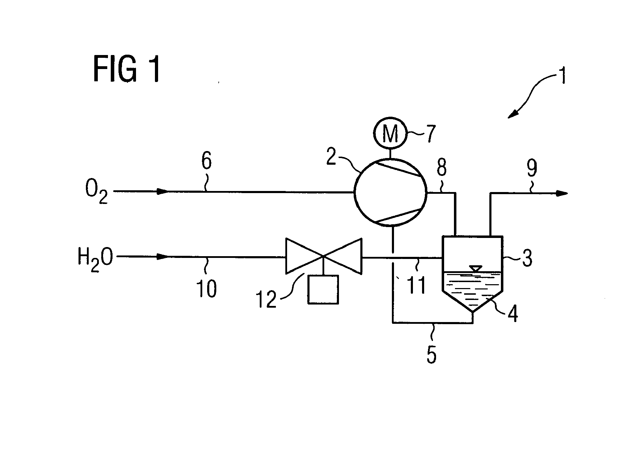

Gemäß FIG 1 umfasst eine erfindungsgemäße Gasbefeuchtungseinrichtung 1 einen Flüssigkeitsringverdichter 2 und einen Flüssigkeitsabscheider 3. Der Flüssigkeitsringverdichter 2 wird von einem Motor 7 angetrieben und über eine Leitung 5 mit Betriebsflüssigkeit wie z.B. Wasser versorgt.

Ein zu verdichtendes und zu befeuchtendes Gas, im vorliegenden Fall beispielsweise Sauerstoff O₂, wird über eine Leitung 6 dem Flüssigkeitsringverdichter 2 zugeführt, darin gleichzeitig verdichtet und befeuchtet und anschließend über eine Leitung 8 dem Flüssigkeitsabscheider 3 zugeführt, in dem Flüssigkeitsbestandteile aus dem verdichteten und befeuchteten Sauerstoff O₂ abgeschieden werden. Der verdichtete und befeuchtete Sauerstoff O₂ kann anschließend über eine Leitung 9 einem Brennstoffzellenstapel zugeführt werden.

Im Flüssigkeitsabscheider 3 sammelt sich die abgeschiedene Flüssigkeit 4. Der Flüssigkeitsabscheider 4 ist über die Leitung 5 mit dem Flüssigkeitsringverdichter 2 zu dessen Versorgung mit Betriebsflüssigkeit verbunden. Der Flüssigkeitsringverdichter 2 kann sich hierdurch die für seinen Betrieb benötigte Flüssigkeit 4 aus dem Flüssigkeitsabscheider 4 saugen und dadurch mit der Flüssigkeit 4 betrieben werden.

Bei einem Ausfall des Motors 7, der zu einem Stillstand des Flüssigkeitsringverdichters 2 führt, wird kein weiterer Sauerstoff O₂ mehr über die Leitung 8 dem Flüssigkeitsabscheider 8 zugeführt, wodurch die Menge an abgeschiedener Flüssigkeit 4 in dem Flüssigkeitsabscheider 3 nicht mehr vergrößert wird. Hierdurch wird ein Nachdrücken von Flüssigkeit in den Flüssigkeitsringverdichter 2 und somit dessen Überflutung bis hin zu einem Flüssigkeitsaustritt in die Zufuhrleitung 6 verhindert.

Für die Nachspeisung der bei der Befeuchtung des Sauerstoffs O₂ verbrauchten Flüssigkeit weist der Flüssigkeitsabscheider 3 Mittel zur Einspeisung von zusätzlicher Flüssigkeit wie z.B. Wasser H₂O in den Flüssigkeitsabscheider 3 auf. Im Ausführungsbeispiel der FIG 1 handelt es sich hierbei um eine mit dem Flüssigkeitsabscheider 3 verbundene Leitung 11, über die aus einer Zufuhrleitung 10 über ein steuerbares Ventil 12 zusätzliches Wasser H₂O dem Flüssigkeitsabscheider 3 zugeführt werden kann.

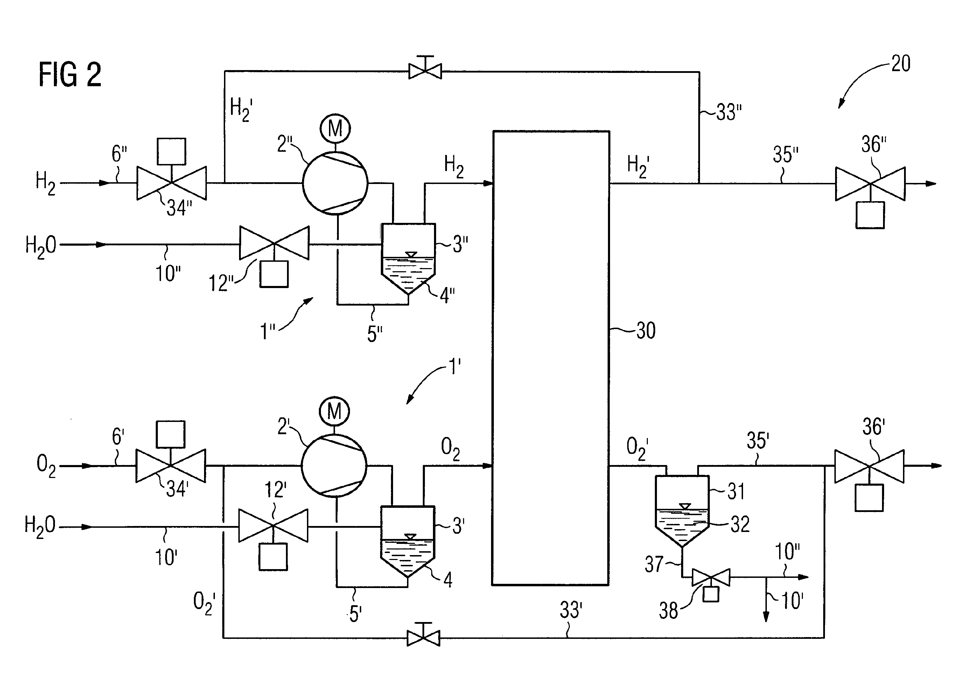

Die in FIG 1 gezeigte Gasbefeuchtungseinrichtung 1 kann gemäß FIG 2 zur Befeuchtung der Prozessgase Wasserstoff H₂ und Sauerstoff O₂ eines Brennstoffzellenstapels 30 einer Brennstoffzellenanlage 20 verwendet werden.

Eine Gasbefeuchtungseinrichtung 1' umfassend einen Flüssigkeitsringverdichter 2' und einen Flüssigkeitsabscheider 3' dient zur Befeuchtung und Verdichtung des Sauerstoffs O₂ und eine Gasbefeuchtungseinrichtung 1" umfassend einen Flüssigkeitsringverdichter 2" und einen Flüssigkeitsabscheider 3" dient zur Befeuchtung des Wasserstoffs H₂. Die Flüssigkeitsringverdichter 2', 2" werden hierbei mit Wasser betrieben.

Der Sauerstoff O₂ wird über eine Leitung 6' dem Flüssigkeitsringverdichter 2' zugeführt. Über ein Stellventil 34' erfolgt eine Einstellung der Durchflussmenge des Sauerstoffes O₂. Der Sauerstoff O₂ wird in dem Flüssigkeitsringverdichter 2' verdichtet und befeuchtet und anschließend vor der Zufuhr zu dem Brennstoffzellenstapel 30 über den Flüssigkeitsabscheider 3' geführt. In dem Flüssigkeitsabscheider 3' werden in dem Sauerstoff O₂ enthaltene Wasserbestandteile abgeschieden.

Das sich in dem Flüssigkeitsabscheider 3' ansammelnde abgeschiedene Wasser 4' wird über eine Leitung 5' dem Flüssigkeitsringverdichter 2' zu dessen Versorgung mit Betriebsflüssigkeit zugeführt. Zusätzlich kann dem Flüssigkeitsabscheider 3' über eine Leitung 10' Kühl- oder Produktwasser H₂O des Brennstoffzellenstapels 30 zugeführt werden. Der Zufluss an Kühl- oder Produktwasser H₂O in den Flüssigkeitsabscheider 3' kann über ein Ventil 12' eingestellt werden.

Über eine Leitung 35' kann der den Brennstoffzellenstapel verlassende Sauerstoff O₂', d.h. das kathodenseitige Prozessabgas, abgeführt werden. Zur Einstellung der Abfuhrmenge ist in die Leitung 35' ein Ventil 36' geschaltet.

Zum Befeuchten und Erwärmen des Sauerstoffes O₂ sowie zur Verringerung des Volumens an benötigtem Sauerstoff wird ein Teil des den Brennstoffzellenstapel 30 verlassenden Sauerstoffes O₂' über eine Rückführleitung 33' eingangsseitig wieder dem (frischen) Sauerstoff O₂ zugeführt. Die Rückführleitung 33' mündet hierzu zwischen dem Ventil 34' und dem Flüssigkeitsringverdichter 2' in die Zuführleitung 6'. Der den Brennstoffzellenstapel 30 verlassende Sauerstoff O₂' wird somit dem Sauerstoff O₂ vor dessen Befeuchtung durch den Flüssigkeitsringverdichter 2' zugeführt.

In entsprechender Weise erfolgt durch eine Gasbefeuchtungseinrichtung 1" eine Befeuchtung des Wasserstoffes H₂. Wasserbestandteile in dem verdichteten und befeuchteten Wasserstoff H₂ werden in einem Flüssigkeitsabscheider 3''aus dem Wasserstoff H₂ abgeschieden. Der Flüssigkeitsringverdichter 2" wird mit Wasser aus dem Flüssigkeitsabscheider 3'' betrieben.

Über eine Rückführleitung 33" erfolgt eine Rückführung eines Teils des den Brennstoffzellenstapel 30 verlassenden Wasserstoffes H₂' in den (frischen) Wasserstoff H₂ vor dessen Befeuchtung und Verdichtung durch den Flüssigkeitsringverdichter 2''.

In die abgasseitige Prozessgasführung des Sauerstoffes O₂ ist zwischen dem Brennstoffzellenstapel 30 und dem Abzweig der Rückführleitung 33' ein Produktwasserabscheider 31 geschaltet. Darin wird in dem den Brennstoffzellenstapel 30 verlassenden Sauerstoff O₂' enthaltenes Produktwasser abgeschieden. Das abgeschiedene Produktwasser 32 wird über eine Leitung 37 und ein Ventil 38 den Leitungen 10' und 10" zur Zuführung von zusätzlichem Wasser H₂O in die Flüssigkeitsabscheider 3', 3" geleitet.

Alternativ oder zusätzlich zu dem Produktwasser kann den Flüssigkeitsabscheidern 3', 3" auch Kühlwasser aus einer Kühleinrichtung des Brennstoffzellenstapels 30, beispielsweise einem Kühlwasserbehälter des Brennstoffzellenstapels 30 zugeführt werden. Dies hat den Vorteil, dass kein gelöster Sauerstoff, der in dem abgeschiedenen Produktwasser 32 enthalten sein könnte, in die Flüssigkeitsvorlage für den Flüssigkeitsringverdichter 2" für den Wasserstoff H₂ gelangt.

## Patentansprüche

1. Verfahren zur Befeuchtung eines Gases (O₂), wobei das Gas (O₂) durch einen Flüssigkeitsringverdichter (2) verdichtet und befeuchtet und anschließend durch einen Flüssigkeitsabscheider (3) geführt wird,
**dadurch gekennzeichnet, dass** der Flüssigkeitsringverdichter (2) mit Flüssigkeit (4) aus dem Flüssigkeitsabscheider (3) betrieben wird.

2. Verfahren nach Anspruch 1, wobei dem Flüssigkeitsabscheider zusätzliche Flüssigkeit (H₂O) zugeführt wird.

3. Gasbefeuchtungseinrichtung (1) umfassend einen Flüssigkeitsringverdichter (2) zu Verdichtung und Befeuchtung eines Gases (O₂) und einen Flüssigkeitsabscheider (3) zur Abscheidung von Flüssigkeit aus dem verdichteten und befeuchteten Gas (O₂) ,
**dadurch gekennzeichnet, dass** der Flüssigkeitsabscheider (3) mit dem Flüssigkeitsringverdichter (2) zu dessen Versorgung mit Betriebsflüssigkeit verbunden ist.

4. Gasbefeuchtungseinrichtung (1) nach Anspruch 3, wobei Mittel (10, 11, 12) zur Einspeisung zusätzlicher Flüssigkeit (H₂O) in den Flüssigkeitsabscheider (3) vorgesehen sind.

5. Verfahren zum Betreiben einer Brennstoffzellenanlage (20), die mindestens einen Brennstoffzellenstapel (30) umfasst, wobei ein Prozessgas (O₂, H₂) für den Brennstoffzellenstapel (30) mit einem Verfahren nach einem der Ansprüche 1 bis 2 befeuchtet wird.

6. Verfahren nach Anspruch 5, wobei dem Prozessgas (O₂, H₂) vor dem Befeuchten durch den Flüssigkeitsringverdichter (2', 2") ein Prozessabgas (O₂', H₂') zugeführt wird.

7. Verfahren nach Anspruch 5 oder 6, wobei dem Flüssigkeitsabscheider (3', 3") zusätzlich eine Kühlflüssigkeit des Brennstoffzellenstapels (30) zugeführt wird.

8. Verfahren nach einem der Ansprüche 5 bis 7, bei dem Produktwasser (32) aus einem Abgas (O₂') des Brennstoffzellenstapels (30) abgeschieden und zusätzlich dem Flüssigkeitsabscheider (3', 3") zugeführt wird.

9. Brennstoffzellenanlage (20) mit einem Brennstoffzellenstapel (30) und einer Gasbefeuchtungseinrichtung (1', 1") nach Anspruch 3 oder 4 zur Befeuchtung eines Prozessgases (H₂, O₂) des Brennstoffzellenstapels (30).

10. Brennstoffzellenanlage (20) nach Anspruch 9, mit einer Prozessabgasrückführung (33', 33''), durch die ein Prozessabgas (O₂', H₂') aus dem Brennstoffzellenstapel (30) dem Prozessgas (O₂, H₂) vor dessen Befeuchtung durch den Flüssigkeitsringverdichter (2', 2'') zuführbar ist.

11. Brennstoffzellenanlage (20) nach Anspruch 9 oder 10, wobei der Flüssigkeitsabscheider (2', 2" ) mit einer Kühleinrichtung des Brennstoffzellenstapels (30) zur Zufuhr von Kühlflüssigkeit (H₂O) in den Flüssigkeitsabscheider (3', 3") verbunden ist.

12. Brennstoffzellenanlage (20) nach einem der Ansprüche 9 bis 11, mit einem Produktwasserabscheider (31) zur Abscheidung von Produktwasser (32) aus einem Prozessabgas (O₂'), wobei der Produktwasserabscheider (32) mit dem Flüssigkeitsabscheider (3', 3") zur Zufuhr von Produktwasser (32) zu dem Flüssigkeitsabscheider (3', 3") verbunden ist.
